Europäisches Patentamt

European Patent Office

Office européen des brevets

(11) Publication number: **0 145 483**
**B1**

## (12) EUROPEAN PATENT SPECIFICATION

(45) Date of publication of patent specification: **15.11.89**

(21) Application number: **84308603.4**

(22) Date of filing: **11.12.84**

(51) Int. Cl.⁴: **H 01 J 29/76**

(54) **Picture correcting apparatus for use with in-line type color picture tube.**

(30) Priority: **12.12.83 JP 234024/83**

(43) Date of publication of application:
**19.06.85 Bulletin 85/25**

(45) Publication of the grant of the patent:
**15.11.89 Bulletin 89/46**

�ividated Contracting States:
**DE FR GB NL**

(56) References cited:
**DE-A-3 222 280**
**US-A-4 445 101**

**PATENTS ABSTRACTS OF JAPAN, vol. 8, no.
231 (E-274)1668r, October 24, 1984; & JP - A -
59 111 491 (NIPPON VICTOR) 27-06-1984**

(73) Proprietor: **VICTOR COMPANY OF JAPAN,
LIMITED**
**3-12, Moriya-cho**
**Kanagawa-ku Yokohama (JP)**

(72) Inventor: **Kobayashi, Toshio**
**371-49 Ootonoi**
**Noda-shi Chiba-ken (JP)**
Inventor: **Hishiki, Hideo**
**1147-64 Oaza Heta**
**Iwai-shi Ibaraki-ken (JP)**

(74) Representative: **Senior, Alan Murray et al
J.A. KEMP & CO 14 South Square Gray's Inn
London WC1R 5EU (GB)**

Courier Press, Leamington Spa, England.

## Description

This invention relates generally to picture correcting apparatus for in-line type color picture tubes, and particularly to such apparatus using saturable reactors respectively connected in series with two horizontal deflecting coils.

Generally speaking, in color picture tubes used in color televisions, it is necessary not only to focus, at phosphor screen, the electron beams respectively emitted from three electron guns but also to converge the same. Therefore, in order to achieve satisfactory convergence of the three electron beams at the phosphor screen in conventional three-electron gun in-line type picture tubes, the horizontal deflecting magnetic field of the deflection yoke is made to have an intense pincushion shape, while the vertical deflecting magnetic field is made to have an intense barrel shape.

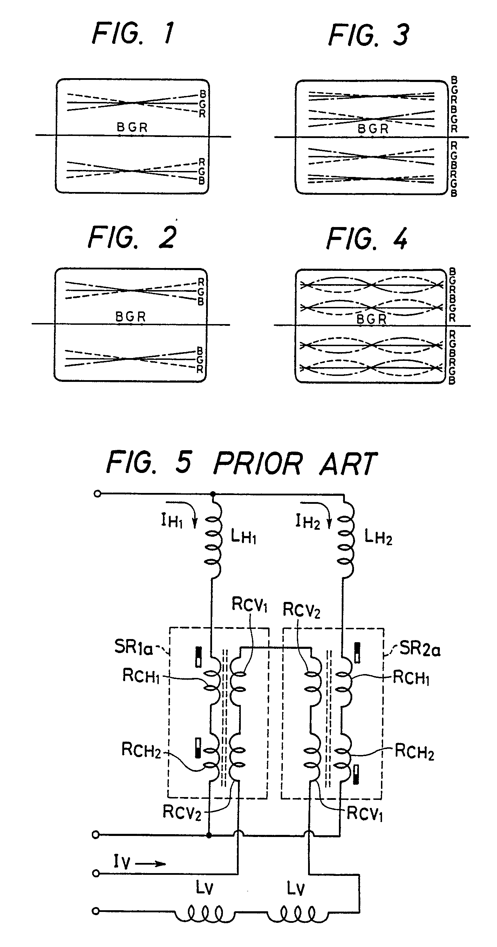

However, when the deflecting angle in a color picture tube becomes large such as 90 degrees or so, then pincushion distortion or barrel distortion occurs at the top and bottom of the raster when the deflecting magnetic field is arranged so as to obtain satisfactory convergence. As a result, such picture tubes are not practical. On the other hand, when the distortion at the top and bottom of the raster is satisfactorily adjusted, then positive-crossing misconvergence shown in Figure 1 or negative-crossing misconvergence shown in Figure 2 occurs and therefore the picture tube is not practical. In this way, in conventional color picture tubes, it has been difficult if not impossible to simultaneously satisfy convergence characteristic and top and bottom raster distortion.

The present applicant has already filed Japanese patent applications 56-91275 titled "Picture Correcting Apparatus for In-Line Color Picture Tube" and 56-111650 titled "Deflecting Apparatus for Color Picture Tube" as apparatus which resolve the above-mentioned problems, and corresponding with the following patents: US—A—4,554,488; GB—A—2 101 860; DE—A—3,222,280; FR—A—250 7817; CA—A—1188724 and NL—A—8202376.

The features known from this prior art have been described in the first parts of the independent Claims 1 and 2.

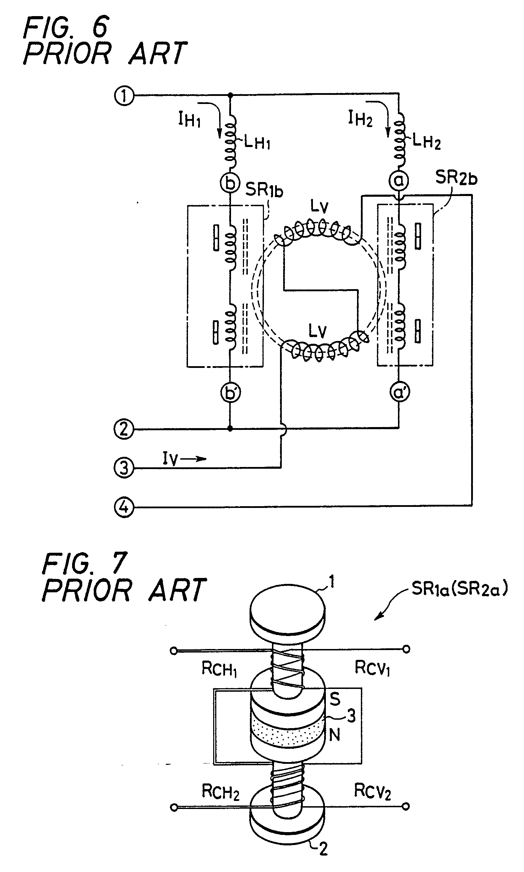

According to this apparatus, as shown in Figures 5 and 6, reactors SR1a, SR2a or SR1b, SR2b, whose impedance varies at a vertical deflection period, and connected to respective horizontal deflecting coils $L_{H1}$, $L_{H2}$ among saddle shaped horizontal deflecting coils $L_{H1}$, $L_{H2}$ and a toroidal vertical deflecting coil which constitute a deflection yoke. The impedance of each of two circuits each including the horizontal deflecting coil LH1 or LH2· is varied such that impedance of one circuit increases or decreases when the impedance of the other circuit decreases or increases so as to vary the distribution of the horizontal deflecting magnetic field as a function of time, thereby obtaining satisfactory picture with convergence characteristics being corrected.

The reactors SR1a, SR2a in the apparatus of Figure 5 have structure shown in Figure 7. In this diagram, the references 1 and 2 are drum or spool type cores made of ferrite magnetic body, and the reference 3 is a permanent magnet which gives d.c. bias magnetic field to respective cores. On each of the spool type cores are wound coils RCH1, RCH2 connected to the horizontal deflecting coil and coils RCV1, RCV2 connected to the vertical deflecting coil. The coils are connected so that winding directions of the coils RCH1 and RCH2 are opposite to each other, while the winding directions of the coils RCV1 and RCV2 are the same.

The coils RCH1, RCH2, RCV1, RCV2 are connected to respective horizontal deflecting coils $L_{H1}$, $L_{H2}$ and to the vertical deflecting coil $L_V$ with a polarity shown in Figure 5.

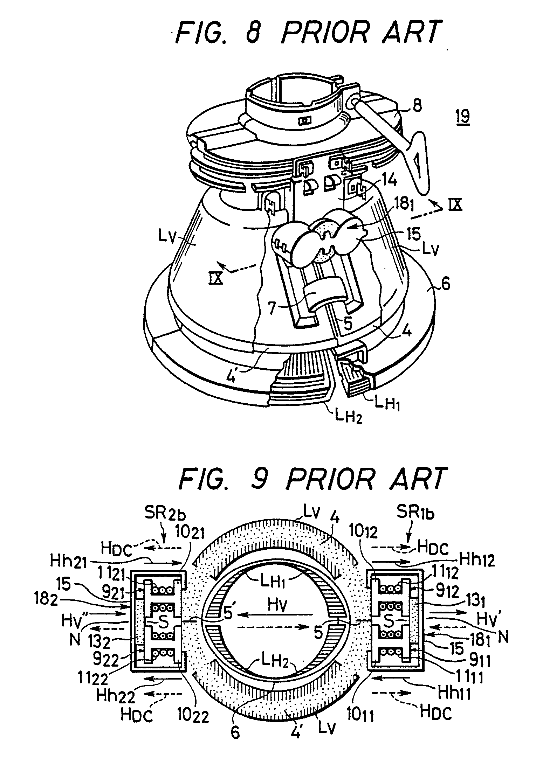

The deflecting apparatus of Figure 6 has actual structure as seen Figures 8 and 9 where the deflecting apparatus is generally designated at the reference 19. The deflecting apparatus 19 is arranged such that reactors SR1b, SR2b, formed of a combination of coils wound around spool type cores, are attached to the vertical deflecting coil. Describing the apparatus further in detail, cores 4, 4' around which the vertical deflecting coil $L_V$ is wound are built in to be placed on a separator 6 made of a synthetic resin in which the horizontal deflecting coils $L_{H1}$ and $L_{H2}$ are built, and are arranged to face each other at a separating surface to be fixed by way of a clamp 7. A coil assembly $18_1$ formed of two coils $19_{11}$ and $9_{12}$ is built in a casing 15 provided on a terminal board 14. The terminal board 14 is secured to a cylindrical flange portion 8 of the separator 14 arranged to receive a rear bend-up portion of the horizontal deflecting coils $L_{H1}$ and $L_{H2}$, and the coil assembly $18_1$ is positioned on the surface of cores around one facing portion 5 among two thereof of the cores 4, 4'. The coil assembly $18_1$ constitutes a saturable reactor SR1b because it is influenced by vertical deflecting magnetic field Hv' emitted outside the cores. Another coil assembly $18_2$, which forms a pair together with the coil assembly $18_1$, is positioned on the surface of cores close to the other facing portion 5', and constitutes a saturable reactor SR2b because it is influenced by vertical deflecting magnetic field Hv'' emitted outside the cores.

As seen in Figures 8 and 9, the coils $9_{11}$, $9_{12}$ formed by winding a conductive wire around spool type cores $10_{11}$, $10_{12}$ and a permanent magnet $13_1$ which gives d.c. magnetic bias to respective cores in common, are all built in the casing 15 with a positional relationship as seen in these diagrams. The other coil assembly $18_2$ has the same structure as that of the coil assembly $18_1$, and comprises spool type cores $10_{21}$, $10_{22}$ with coils $11_{21}$, $11_{22}$ and a permanent magnet $13_2$ for giving d.c. magnetic bias which are all built in a casing 15.

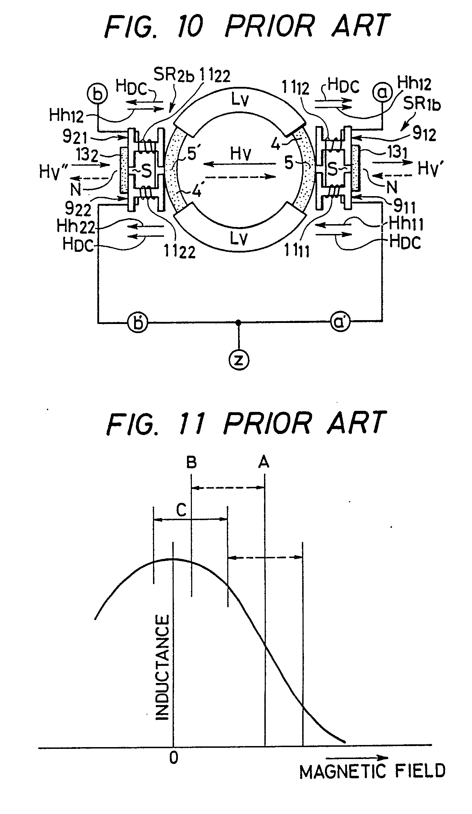

As seen in Figure 10, the above-mentioned coils $11_{11}$, $11_{12}$ are connected to each other so that they are in the same direction and opposite direction respectively with respect to the vertical deflecting magnetic field Hv', while coils $11_{21}$, $11_{22}$ are connected to each other so that they are in the same direction and opposite direction respectively with respect to the vertical deflecting magnetic field Hv'', and as seen in Figure 6, these coils are connected to corresponding horizontal deflecting coils $L_{H1}$ and $L_{H2}$. The permanent magnets $13_1$ and $13_2$ respectively have radial U-shaped grooves and are attached so as to be rotated when forcibly rotated, thereby the amount of magnetic bias being changed by rotation of the same. DE—A—3,222,280 discloses a device of the type shown in Figures 8 to 10 and is the disclosure which forms the basis of the prior art portion of each of claims 1 and 2.

However, even in the above-described apparatus, misconvergence occurs such that positive crossing occurs at the center of the picture and negative crossing occurs at the periphery as shown in Figure 3, or in a small picture tube of 12-inch or smaller type of 90° deflection, an inversed S-shaped misconvergence occurs as shown in Figure 4 because the amount of misconvergence is large as shown in Figure 1. It has been extremely difficult to correct misconvergence of this sort using conventional techniques, and the reason why will be described hereinbelow.

One approach of correcting the misconvergence pattern of Figure 3 is the method described in the already mentioned patent application 56-91275 "Picture Correcting Apparatus of In-Line Type Color Picture Tube" filed previously by the present applicant. The point of this method of correction is that the acting range of the control magnetic field acting on the coil bodies $9_{11}$ to $9_{22}$ is set to C in a graph of Figure 11 showing the relationship between magnetic field and inductance, with the amount of the d.c. magnetic bias being made small from A to B. To obtain such an acting range C, it is necessary not only to reduce the amount of d.c. magnetic bias but also narrow the diameter of the spool type cores $10_{11}$ to $10_{22}$, and therefore, productivity lowers in the manufacturing process of the spool type cores or the spool type cores are apt to be broken during winding operation and these phenomena are problems on mass-production.

The S-shaped misconvergence shown in Figure 4 is a phenomenon which occurs when the number of turns of the coils $11_{11}$ to $11_{22}$ is increased so as to increase the inductance variation of the saturable reactors SR1b, SR2b, and this is caused from the increase in ampere-turns of the horizontal deflecting current flowing through the coils $11_{11}$, $11_{22}$ and the number of turns of the coils $11_{11}$ to $11_{22}$. This point will be described in detail hereinlater.

At the present time, since the above-mentioned S-shaped misconvergence and the misconvergence shown in Figure 3 cannot be completely removed, deflection yokes for color picture tubes are manufactured by finding a compromisable condition in which the error in convergence is scattered throughout the entire picture so that error appears as an average value at any points.

Although it is ideal that an error in misconvergence is equal to or less than 0.2 mm in a super highly precise or highly precise picture tubes whose dot pitch is 0.21 to 0.33 mm, skilled workers are needed to achieve adjustment for reducing the error in misconvergence to such an extent, while it takes a long period of time and the result of adjustment are not necessarily satisfactory. Namely, there has been a drawback that it is impossible to mass produce low cost deflection yokes having a misconvergence level that is required by the market.

Summary of the invention

The present invention has been developed in order to remove the above-described drawbacks inherent to the conventional picture correcting apparatus for use with an in-line type picture tube.

It is, therefore, an object of the present invention, as characterised in the independent claims 1 and 2, to provide a new and useful picture correcting apparatus for use with an in-line type picture tube, with which various patterns of misconvergence can be readily corrected without requiring complex circuit arrangements.

The value of $\Theta e/\Theta m$ is set to be equal to or less than 0.5, and may assume a negative value whose smallest limit is −1 as will be described hereinafter. This means that the magnetic field applied to the saturable reactors may be increased to an extent that the slope of inductance curve of the saturable reactors represented by $\Theta e$ has a polarity different from that of the slope represented by $\Theta m$.

While in the first embodiment, an auxiliary coil is employed in each saturable reactor so as to produce a magnetic field which varies with the vertical deflection period, in the other embodiments, a circular magnetic member or a pair of U-shaped magnetic members are attached to the cores of the saturable reactors so as to reduce reluctance of the magnetic circuit thereof. With such arrangements of the present invention, the magnitude of the magnetic field applied to the saturable reactors has been increased compared to conventional arrangement, and therefore, the increasing rate of the amount of correction of convergence of horizontal lines on the screen decreases as the magnitude of the vertical deflection increases toward the top and bottom of the screen.

Brief description of the drawings

The object and features of the present invention will become more readily apparent from the following detailed description of the preferred embodiments taken in conjunction with the accompanying drawings in which:

Figures 1 to 4 are diagrams showing different misconvergence patterns;

Figures 5 and 6 are wiring diagrams showing respectively examples of deflection yokes which are conventional picture correcting apparatus;

Figure 7 is a diagram showing the structure of a reactor applied to Figure 5;

Figure 8 is a diagram showing a deflection yoke of Figure 6;

Figure 9 is a cross-sectional view taken along a horizontal plane including a line IX—IX in Figure 8;

Figure 10 is a wiring diagram of the reactor of Figures 8 and 9;

Figure 11 is a diagram for the description of the conventional way of correction of misconvergence;

Figure 12 is circuit diagram of an embodiment of picture correcting apparatus according to the present invention;

Figure 13 is a perspective view of a deflection yoke which is present invention apparatus;

Figure 14 is a cross-sectional view taken along a horizontal plane including a line XIV—XIV in Figure 13;

Figure 15 is a diagram showing the saturable reactor of Figure 13 with the same being taken out therefrom;

Figure 16 is a perspective view showing a controlled coil and a permanent magnet both built in the reactor of Figure 15;

Figure 17 is a perspective view showing an auxiliary control coil which is separated from the saturable reactor of Figure 15;

Figure 18 is a diagram showing a curve of the change in inductance;

Figures 19 and 20 are inductance change curves approximated by hyperbolic functions;

Figures 21A to 21D and 22A to 22D are graphs showing the amount of correction of convergence;

Figure 23 is a perspective view of another embodiment of the present invention apparatus;

Figure 24 is a cross-sectional view taken along a plane including line XXIV—XXIV in Figure 23;

Figure 25 is a perspective view of a further embodiment of the present invention apparatus; and

Figure 26 is a cross-sectional view taken along a plane including line XXVI—XXVI in Figure 25.

The same or corresponding elements and parts are designated at like reference numerals throughout the drawings.

Detailed description of the invention

Embodiments of the present invention will be described with reference to drawings following Figure 11. In the embodiments, the picture correcting apparatus has a structure such that it is built in a portion of a deflection yoke of a color picture tube. More specifically, the picture or raster correcting apparatus is a part of a deflection yoke attached to a neck of a color picture tube of in line type to which self-convergence system is applied. Self-convergence system is a system in which dynamic convergence of three electron beams from three electron guns arranged in line is automatically performed by way of the horizontal and vertical deflecting magnetic fields by making a pincushion-shaped horizontal deflecting magnetic field and a barrel-shaped vertical deflection magnetic field.

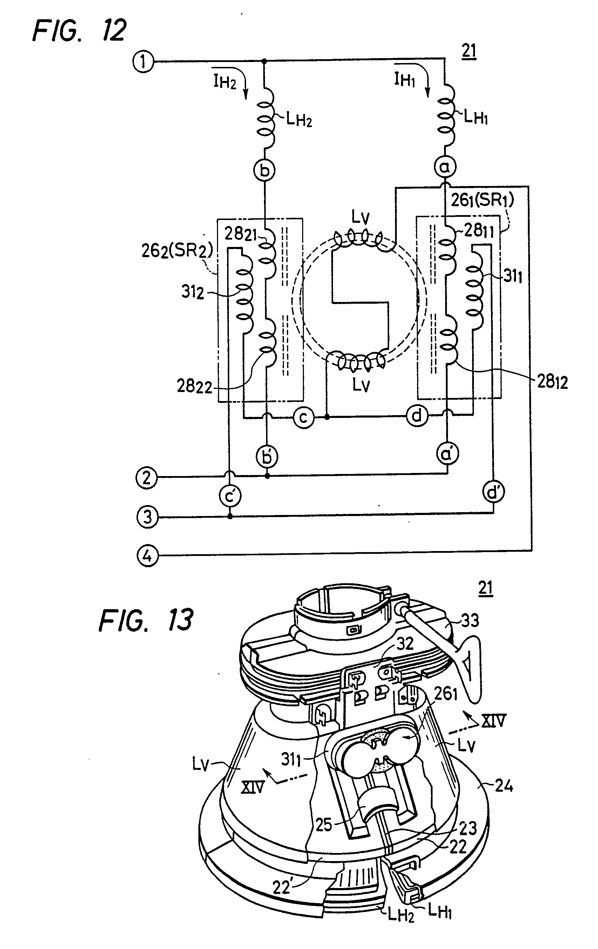

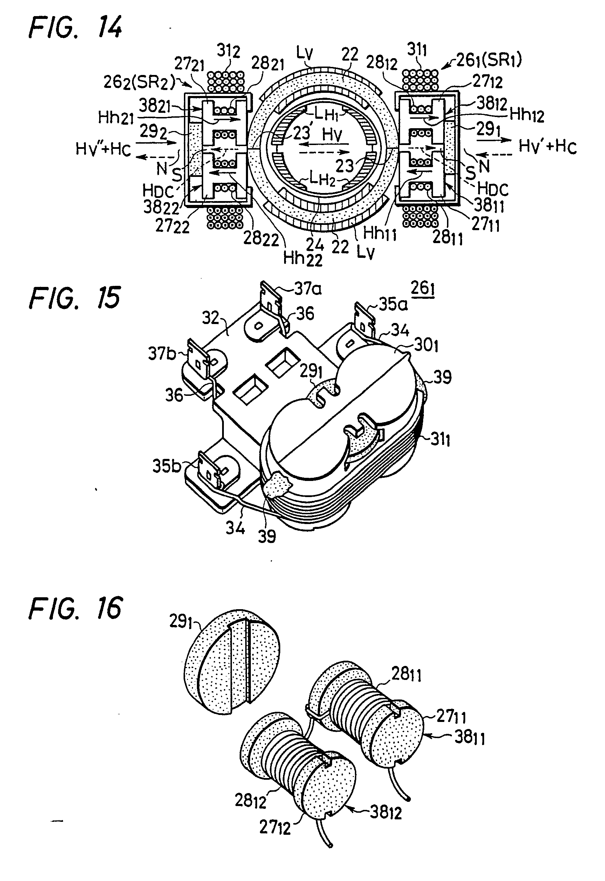

Referring now to Figure 12 a circuit diagram of an embodiment of the present invention is shown. Figures 13 and 14 show mechanical structures of the picture correcting apparatus of Figure 12 respectively. In these diagrams, the references $L_{H1}$, $L_{H2}$ are a pair of saddle shaped horizontal deflecting coils; the reference $L_v$ being a toroidal vertical deflecting coil and these members form a deflection yoke 21. The vertical deflecting coil LV actually comprises a pair of coils connected in series and this pair of coils is simply referred to as a vertical deflecting coil LV in the following description.

A pair of cores 22, 22', around which the vertical deflecting coil $L_v$ is wound, face each other and are secured by a clamper 25 under the condition that the cores 22, 22' are placed on a separator 24 made of an insulating material, in which the horizontal deflecting coils $L_{H1}$, $L_{H2}$ are built. Furthermore, a pair of saturable reactors $26_1$, $26_2$ (SR1, SR2), which constitute a main part of the present invention, are attached in the vicinity of a facing portion 23.

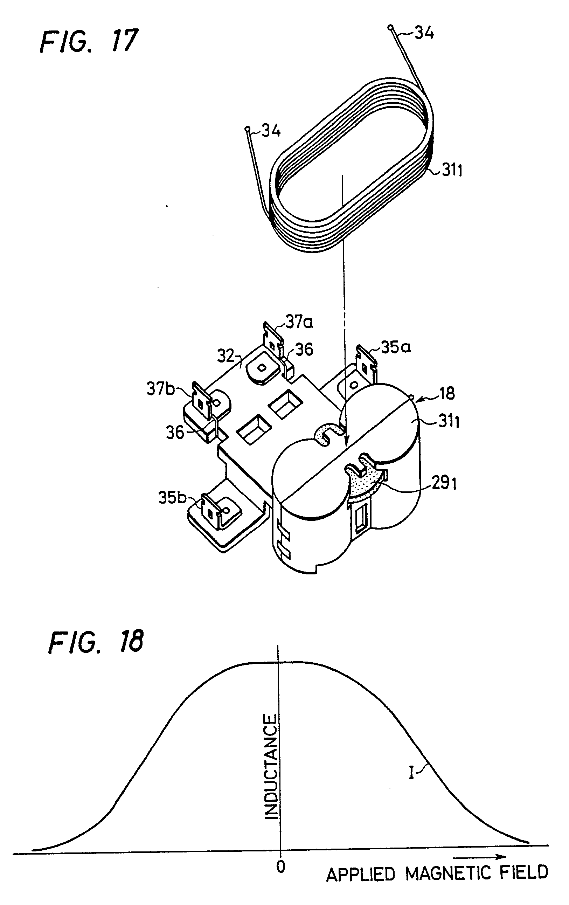

Figure 15 shows this saturable reactor $26_1$ as it has been taken out. The saturable reactor $26_1$ has a structure such that coil bodies $38_{11}$, $38_{22}$ (Figure 16) with controlled coils $28_{11}$, $28_{22}$ made of conductive wires wound around spool type cores $27_{11}$, $27_{12}$ shown in Figure 16 and a single permanent magnet $29_1$ for giving d.c. magnetic bias are built in a casing $30_1$ made of a synthetic resin with the positional relationship shown in the diagram, while an auxiliary control coil 311, which forms a main part of the present invention, is telescopically applied to the outer periphery of the casing $30_1$ to be secured thereto as shown in Figure 17. The saturable reactor $26_1$ is attached such that a terminal board 32, which is integral with the casing $31_1$, is secured to a cylindrical flange portion 33 of the separator 24.

The auxiliary control coil $31_1$ has a structure such that a wire having heat-fusable layer on the surface of an insulating film is wound by a given number of turns in an ellipse in a manner of multilayer solenoid and is hardened as shown in Figure 17. The auxiliary control coil $31_1$ is telescopically coupled with the periphery of the casing 30 and is secured thereto by means of an adhesive 39. Lead wires 34 at both ends of the auxiliary control coil $31_1$ are connected to terminals 35a, 35b of the terminal board 32 as shown in Figure 15, while lead wires 36 at both ends of the controlled coils $28_{11}$, $28_{12}$ are connected to terminals 37a, 37b.

The other saturable reactor $26_2$ has the same structure as the above-mentioned saturable reactor $26_1$ such that it has coil assemblies $38_{21}$, $38_{22}$ having controlled coils $28_{21}$, $28_{22}$ formed on spool type cores $27_{21}$, $27_{22}$, a permanent magnet $29_2$ for giving d.c. magnetic bias, and an auxiliary control coil $31_2$.

The controlled coils $28_{11}$ and $28_{22}$ as well as $28_{21}$ and $28_{22}$ are connected to each other so that their winding directions are opposite to each other.

As shown in Figure 12, the auxiliary control coils $31_1$ (ⓒ ~ⓒ ), $31_2$ (ⓓ ~ ⓓ ) are connected in

parallel, and this parallel circuit is connected in series with the vertical deflecting coil $L_V$. The winding direction of the auxiliary control coils $31_1$, $31_2$ is determined so that an auxiliary magnetic field Hc of the same polarity as that of the magnetic fields Hv', Hv'' emitted outside from the cores 4 and 4' is generated. The controlled coils $28_{11}$, $28_{22}$ are connected in series to one horizontal deflecting coil $L_{H1}$, while controlled coils $28_{21}$, $28_{22}$ are connected to the other horizontal deflecting coil $L_{H2}$ in series. With this arrangement, the controlled coils $28_{11}$ and $28_{12}$ which are connected in series are connected in series with the first horizontal deflecting coil $L_{H1}$ so as to form a first series circuit, while the controlled coils $28_{21}$ and $28_{22}$ which are connected in series are also connected in series with the second horizontal deflecting coil LH2 so as to form a second series circuit. These two series circuits are connected in parallel between terminals 1 and 2 to receive a horizontal deflection driving current applied from an unshown known deflection driving circuit.

The permanent magnets $29_1$, $29_2$ (Figure 16) are circular plates having a radial wide U-shaped groove, and are attached so as to be manually rotatable to adjust d.c. magnetic bias with the rotation of the same.

In addition to the magnetic field Hv' emitted outside the cores 4 and 4' with the vertical deflecting period and the d.c. bias magnetic field $H_{DC}$ from the permanent magnet $29_1$, an auxiliary magnetic field Hc by vertical deflecting current flowing through the auxiliary control coil 311 acts on the saturable reactor $26_1$ of the above-described structure as shown in Figure 14 so that the inductance between both terminals of the controlled coils $28_{11}$, $28_{12}$, i.e. terminals ⓐ ~ⓐ (37a, 37b) is varied in accordance with the change in the control magnetic fields Hv'+Hc. Similarly, the inductance between both terminals ⓑ ~ⓑ of the controlled coils $28_{21}$, $28_{22}$ of the other saturable reactor $26_1$ is varied in accordance with the magnetic field Hv'' emitted outside the cores 4 and 4'+the auxiliary magnetic field Hc from the auxiliary control coil $31_2$.

As described in the above, the present invention apparatus is arranged such that error in misconvergence is corrected by changing impedance of circuits including horizontal deflecting coils $L_{H1}$, $L_{H2}$ and the controlled coils of the saturable reactors SR1 and SR2, by way of control magnetic fields Hv'+Hc, Hv''+Hc which varies with a vertical deflecting period, and by way of a magnetic field Hh which is generated by the horizontal deflecting current flowing through the controlled coils $28_{11}$ to $28_{22}$ per se.

The saturable reactors SR1, SR2 of the above-mentioned deflection yoke 21 have a basic structure that auxiliary control coils $31_1$, $31_2$ are added to saturable reactors SR1b, SR2b used in conventional deflecting apparatus, and therefore, the following description will be made under an assumption that the auxiliary control coils $31_1$, $31_2$ are added to saturable reactors SR1b, SR2b used in conventional apparatus.

Since saturation characteristic of the inductance of a coil wound around a ferrite core changes generally as shown by a curve I in Figure 18, the value of inductances L11, L12, L21, L22 of the respective coils 2811, 2812 and coils 2821, 2822 as well as the value of inductances LSR1, LSR2 of the saturable reactors SR1, SR2 are given by the following equations with the values being approximated and normalized:

$$L_{11}=(1/2)\tanh\{(\pi/2)\sinh(H+1.5)\}+(1/2) \tag{1}$$

$$L_{12}=(1/2)\tanh\{(\pi/2)\sinh(-H+1.5)\}+(1/2) \tag{2}$$

$$L_{21}=(1/2)\tanh\{(\pi/2)\sinh(H+1.5)\}+(1/2) \tag{3}$$

$$L_{22}=(1/2)\tanh\{(\pi/2)\sinh(-H+1.5)\}+(1/2) \tag{4}$$

$$L_{SR1}=L_{11}+L_{12} \tag{5}$$

$$L_{SR2}=L_{21}+L_{22} \tag{6}$$

Here;

$$H=H_{DC}+Hcv+Hh \tag{7}$$

$$Hcv=Hc+Hv'$$

or

$$Hcv=Hc+Hv'' \tag{8}$$

In Eqs. (7) and (8);
$H_{DC}$ is a d.c. bias magnetic field;
Hcv is the control magnetic field of vertical deflecting period (Hc+Hv' or Hc+Hv'')
Hh is a magnetic field by the horizontal deflecting current flowing through the controlled coils.

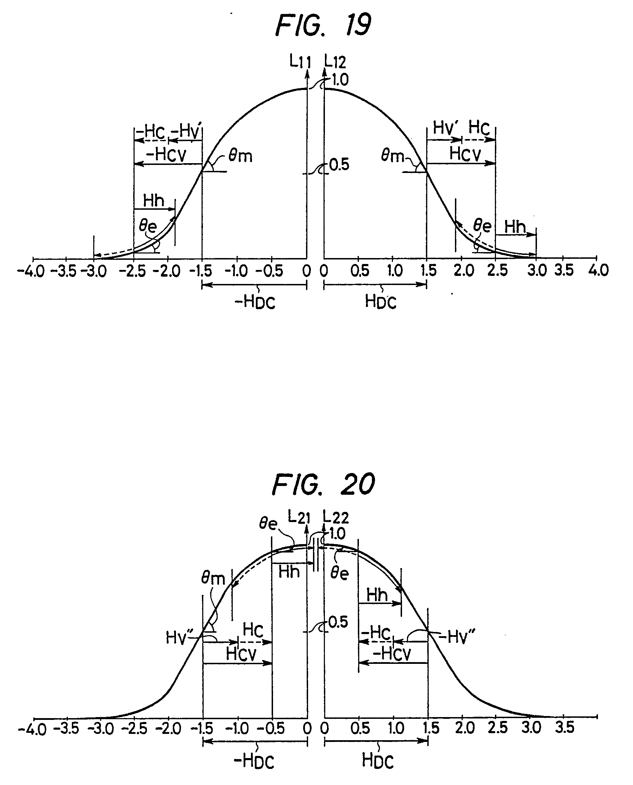

In Figures 19 and 20, the variation of the magnetic field Hh in the direction of the solid line in the diagram indicates that deflection is made toward the right of the screen, while the variation toward the broken line indicates that deflection is made toward the left of the screen. As will be understood from this, the inductances of the saturable reactors SR1, SR2 change in opposite directions in accordance with the variation in the horizontal deflecting current. This is described in detail in a patent application 57-221598 (published June 27, 1984, under provisional publication No. 59-111481) titled "Picture Correcting Apparatus for In-Line Type Color Picture Tube".

Since the amount of convergence correction is substantially proportional to the inductance of the saturable reactors SR1, SR2 and horizontal deflecting distance along the screen (see Figures 1 to 3) the amount of correction Δ (x, y) of convergence is given by the following equation when the center of the screen is used as an origin of coordinate and the horizontal direction and vertical direction are respectively set to x-distance and y-distance:

$$\Delta(x, y) = \left| L_{SR1}(x, y) - L_{SR2}(x, y) \right| \times \left| (Ihx/Ihp) \right| \qquad (9)$$

wherein Ihp is the maximum horizontal deflecting current (in the case of deflection to the end of the screen);

Ihx is the horizontal deflecting current necessary for deflecting to x co-ordinate;

$L_{SR1}$ (x, y) is the value of inductance of the saturable reactor SR1 caused from the magnetic field Hh by the horizontal deflecting current and from the control magnetic field Hcv by the vertical deflecting current necessary for deflecting to a co-ordinate (x, y);

$L_{SR2}$ (x, y) is the value of inductance of the saturable reactor SR2 caused from the magnetic field Hh by the horizontal deflecting current and from the control magnetic field Hcv by the vertical deflecting current necessary for deflecting to a co-ordinate (x, y).

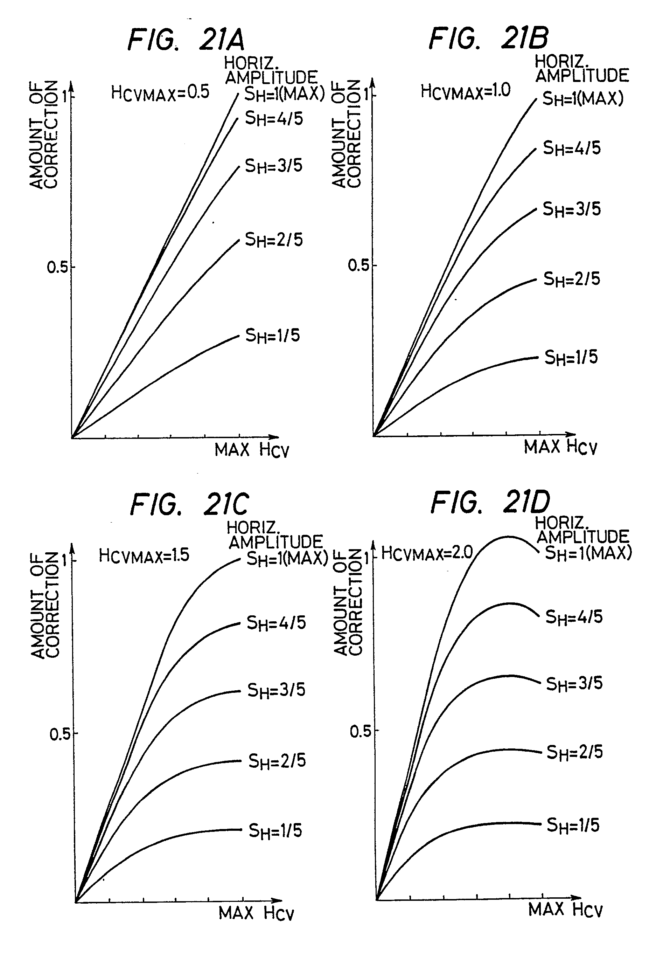

Figures 21A to 21D are diagrams drawn with the amount of correction on remaining portions on the screen being calculated using these equations were 0.55 is substituted for Hhmax as a substitute of ampere-turns of the controlled coil, which value is necessary for calculation, and the amount of correction in the case that vertical and horizontal deflections are maximum (i.e. at four corners of the screen) is set to 1.

It will be understood from these diagrams that as the magnitude of the control magnetic field becomes larger and larger, namely as the vertical deflection is strongly made, the increasing rate of the amount of convergence correction becomes smaller and smaller. The horizontal amplitude SH in the diagram is in proportion to the magnetic field intensity Hh. Therefore, misconvergence of Figure 3 having a pattern that the error becomes smaller and smaller as approaching the top and bottom from the center of the screen in the vertical direction, i.e. as the magnitude of vertical deflection becomes larger, can be corrected.

The reason why such correction is possible is that the inductances $L_{11}$ to $L_{22}$, $L_{SR1}$, $L_{SR2}$ are functions of the magnetic field Hh as will be understood from Eqs. (1) to (9), and basically, that there is a difference in differential coefficient of the varying curve of the inductance between the beginning or ending of vertical deflection, i.e. top and bottom of the screen, and a place around the center of the screen where the vertical deflection is very small.

Using θe for the differential coefficient of the variation of the inductance corresponding to the top and bottom of the screen, and using θm for the differential coefficient around the center of the screen (see Figures 19 and 20), when the control magnetic field Hcv is changed, then θe/θm varies. It has been confirmed as a result of experiments with the control magnetic field Hcv being changed to various values for correcting misconvergence, that desired correction is resulted when θe/θm is equal to or smaller than 0.5. Since the intensity of the magnetic field applied to the controlled coil of each of the saturable reactors SR1 and SR2 can be increased to an extent that the polarity of θe may be different from that of θm, θe/θm may assume a negative value. Since the maximum absolute value of θe equals the absolute value of θm, θe/θm assumes −1 at the smallest.

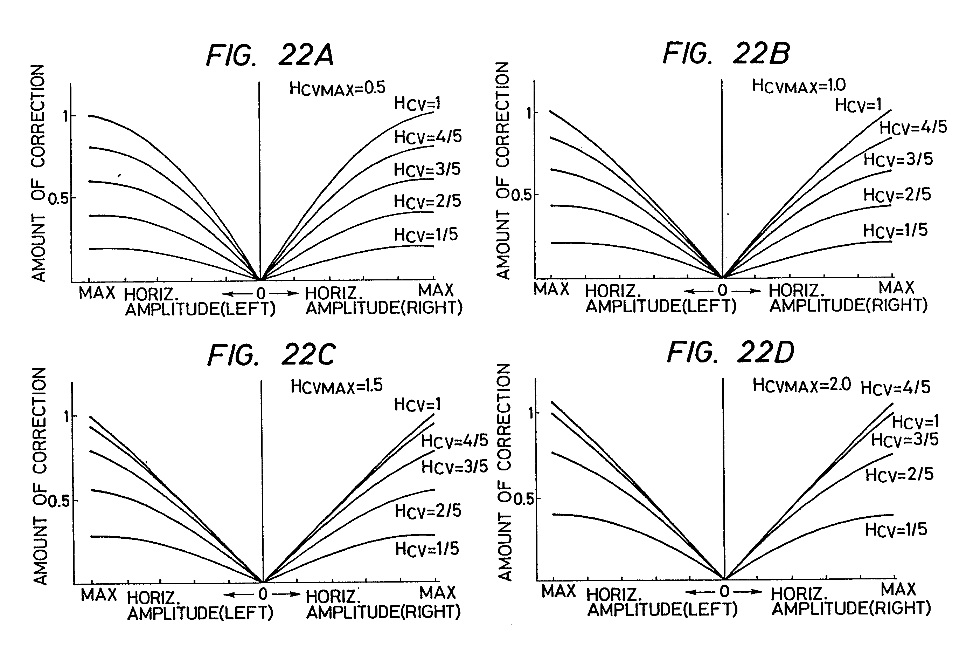

The amounts of corrections at respective portions on the S-shaped misconvergence screen of Figure 4 are calculated using the above Eqs. (1) to (9), and are shown in Figures 22A to 22D. From these diagrams, it will be understood that the amount of correction increases along the increase in the horizontal amplitude SH as the control magnetic field Hcv max becomes larger and larger. Namely, it will be understood that the misconvergence shown in Figure 4 can be corrected by the present invention apparatus.

This correction is basically a function of Hh/Hcv, and when Hh/Hcv is made small, the effect of correction is exhibited. However, in order to correct the pattern shown in Figure 3, since it is impossible to drastically change the value of Hh, it is necessary to make the value of Hcv large to reduce Hh/Hcv.

When both Hh/Hcv and θe/θm are made small, it is now possible to correct misconvergence corresponding to a combination of the misconvergences of Figures 3 and 4.

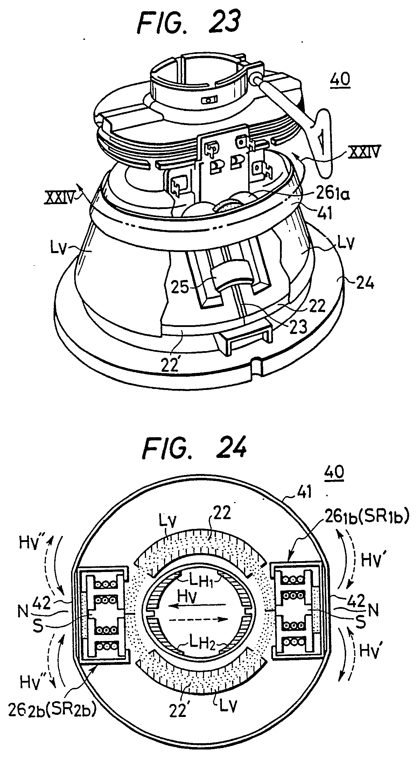

Figures 23 and 24 show another embodiment of the picture correcting apparatus according to the present invention. In these diagrams, constructional parts which are the same as those in Figures 13 and 14 are designated at like references, and their description is omitted.

A deflection yoke 40 has a structure such that an ellipse ring or belt 41 made of a magnetic substance, which surrounds the deflection yoke 40, is secured by way of an adhesive so as to be in contact with the casings $30_1$, $30_2$, while the above-mentioned auxiliary control coil 31 is removed. More specifically, the ring 41 is located so as to be close to an outer surface of the disk-like permanent magnets 42 of the saturable reactors SR1b and SR2b. According to the deflection yoke 40 having such structure, the reluctance of the magnetic circuit including the saturable reactors $26_{1b}$, $26_{2b}$ is reduced so that the ring 41 picks up magnetic fields Hv', Hv'' of vertical deflection period which is emitted outside the core 41. With this operation, the magnetic fields Hv', Hv'' passing through the spool type cores $27_{11}$, $27_{12}$ of the saturable reactors SR1b, SR2b are increased so as to obtain the same results as the above-mentioned deflection yoke 40.

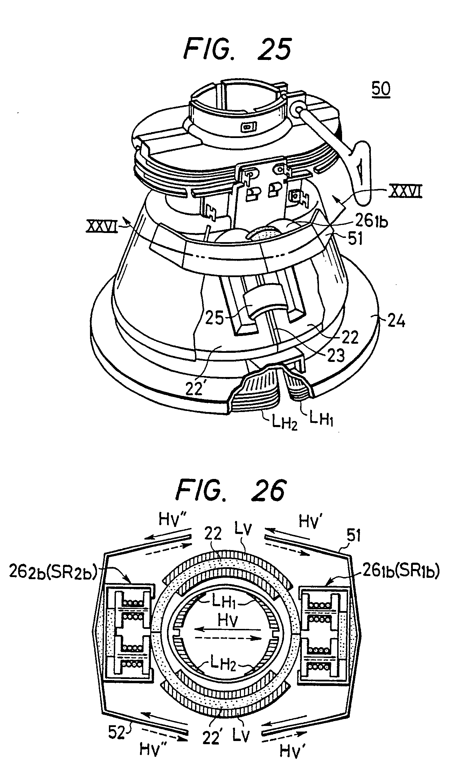

Figures 25 and 26 show a further embodiment of the present invention apparatus. In these diagrams, constructional parts which are the same as those in Figures 21 and 22 are designated at like references, and their description is omitted.

A deflection yoke 50 has a structure such that U-shaped wing members 51, 52 made of a magnetic substance are adhered and secured to the casings $30_1$, $30_2$ in place of the ring 41. The wing members 51, 52 operate similarly to the above-mentioned ring 41 so that the magnetic fields Hv', Hv''

passing through the spool type cores $27_{11}$, $27_{12}$ of the saturable reactors $26_{1b}$, $26_{2b}$ (SR1b, SR2b) are increased. The deflection yoke 50 also functions in the same manner as the above-mentioned deflection yoke 40.

The above-mentioned ring 41 and wing members 51, 52, which are made of a magnetic substance, have a function, in addition to a function of increasing the above-mentioned control magnetic field, of weakening leakage flux emitted from the deflection yoke to the periphery thereof, and it also operates as a shielding which reduces the influence by metallic plates around the picture tube to the deflection magnetic field. As a result, the freedom in designing of a television set can be remarkably improved.

Even in the correcting apparatus having a circuit shown in Figure 5, if the number of turns of the control coils Rcv1, Rcv2 is increased, the magnitude of the control magnetic field Hcv is made large providing the same effect as the above-mentioned deflection yoke 40.

Furthermore, although the magnitude of the control magnetic field has been increased in the above-described respective embodiments for setting $\theta e/\theta m$ to a value equal to or smaller than 0.5, it is also possible to set $\theta e/\theta m$ to a value equal to or smaller than 0.5 by suitably selecting the substance of the spool type cores such that the substance is of high maximum magnetic flux density Bm and low residual flux density Br like Mn Zn. However, this way of achieving a small value of $\theta e/\theta m$ by selecting only the substance of the spool type cores is not practical because temperature characteristic of such a saturable reactor is unstable. For this reason, it is necessary to use one of the above-mentioned auxiliary coils 311 and 312, ring 41 or the U-shaped wings 51 and 52 to obtain a desired value of $\theta e/\theta m$.

As described in the above, since the apparatus for correcting picture of in-line type color picture tube according to the present invention has a structure such that a control magnetic field by way of a sawtooth wave current of vertical deflecting period, for saturable reactors used in apparatus for error in convergence of horizontal lines by changing the distribution of the magnetic field of the horizontal magnetic field with horizontal deflecting currents flowing through a pair of horizontal deflecting coils being differentially changed at vertical deflecting period by way of horizontal deflecting current flowing through controlled coils of the saturable reactors, it is now possible to minimize errors in misconvergences shown in Figures 3 and 4 which are difficult to correct, without using a dynamic convergence correcting circuit or the like, i.e. with a simple structure, while improvement in picture quality can be actualized together with reduction in manufacturing cost and improvement in manufacturing efficiency, and furthermore, since the increase in the control magnetic field is aimed by providing an auxiliary magnetic field forming coil which adds an auxiliary magnetic field, or by providing a yoke which effectively utilizes magnetic flux emitted outside the core of the deflection yoke, the structure is extremely simple so that the arrangement does not need particular room.

## Claims

1. A picture correcting apparatus (21) for use with an in-line type color picture tube of a self-convergence system, comprising:

(a) first and second horizontal deflecting coils ($L_{H2}$, $L_{H2}$);

(b) first and second vertical deflecting coils ($L_V$);

(c) a first saturable rector ($26_1$, $SR_1$) having first and second control coils ($28_{11}$, $28_{12}$) connected in series and wound in opposite directions, first and second coils ($RCV_1$, $RCV_2$) connected to said first vertical deflecting coil ($L_V$), first and second cores ($27_{11}$, $27_{12}$) respectively provided for said first and second control coils ($28_{11}$, $28_{12}$), and at least one first permanent magnet ($29_1$) for magnetizing said first and second cores ($27_{11}$, $27_{12}$) in a given direction, the circuit formed by said first and second control coils ($28_{11}$, $28_{12}$) being connected in series to said first horizontal deflecting coil ($L_{H1}$) so as to form a first series circuit ($L_{H1}$, $28_{11}$, $28_{12}$):

(d) a second saturated reactor ($26_2$, $SR_2$) having third and fourth control coils ($28_{21}$, $28_{22}$) connected in series and wound in opposite directions, third and fourth coils ($RCV_1$, $RCV_2$) connected to said second vertical deflecting coil ($L_V$), third and fourth cores ($27_{21}$, $27_{22}$) respectively provided for said third and fourth control coils ($28_{21}$, $28_{22}$), and at least one second permanent magnet ($29_2$) for magnetizing said third and fourth cores ($27_{21}$, $27_{22}$) in a given direction, the circuit formed by said third and fourth control coils being connected in series to said second horizontal deflecting coil ($L_{H2}$) so as to form a second series circuit ($L_{H2}$, $28_{21}$, $28_{22}$); said first and second series circuits being connected in parallel to form a parallel circuit having an input to receive a horizontal deflection driving current ($I_H$);

said first and second saturable reactors ($26_1$, $26_2$) being positioned diametrically opposite one another with respect to a neck portion of said picture tube (21) so as to receive leakage flux from said first and second vertical deflecting coils ($L_{H1}$, $L_{H2}$);

the winding directions of said first through fourth control coils ($28_{11}$—$28_{22}$) and the polarity of said permanent magnets ($29_1$, $29_2$) of said first and second saturable reactors ($26_1$, $26_2$) being selected such that the impedance of said circuits formed said first and second coils ($28_{11}$, $28_{12}$) increases or decreases when the impedance of said circuit formed by said third and fourth control coils ($28_2$, $28_{22}$) respectively decreases or increases in accordance with the degree of vertical deflection effected by said vertical deflecting coils ($L_V$); characterised in that

(e) means ($SR_{1a}$, $SR_{2a}$) are provided for causing a ratio $\Theta e/\Theta m$ to assume a value equal to or smaller than 0.5 so that increasing the rate of the amount of correction of the convergence of horizontal lines decreases as the degree of vertical deflection is increased, where $\Theta m$ is a differential coefficient around the center of the picture where the degree of vertical deflection is very small and $\Theta e$ is a differential coefficient representing the top and bottom sides of the picture where the degree of vertical deflection is maximum, each of said differential coefficients corresponding to the changing rate of the inductance of said first through fourth control coils ($28_{11}$—$28_{22}$) of said saturable reactors ($26_1$, $26_2$),

said means ($SR_{1a}$, $SR_{2a}$) including first and second auxiliary coils ($31_1$, $31_2$) respectively wound around both said first and second cores ($27_{11}$, $27_{12}$) of said first saturable reactor ($26_1$, $SR_1$) and both said third and fourth cores ($27_{21}$, $27_{22}$) of said second saturable reactor ($26_2$, $SR_2$), said first and second auxiliary coils ($31_1$, $31_2$) being connected to said vertical deflecting coils ($L_V$) in series to be supplied with a vertical deflecting driving current, the winding direction of said auxiliary coils ($31_1$, $31_2$) being selected so that the magnetic field ($H_e$) produced by said auxiliary coils is respectively in the same direction as that of said leakage flux ($H_{V1}$, $H_{V11}$).

2. A picture correcting apparatus (21) for use with an in-line type color picture tube of a self-convergence system, comprising:

(a) first and second horizontal deflecting coils ($L_{H2}$, $L_{H2}$);

(b) first and second vertical deflecting coils ($L_V$);

(c) a first saturable reactor ($26_1$, $SR_1$) having first and second control coils ($28_{11}$, $28_{12}$) connected in series and wound in opposite directions, first and second coils ($RC_{V2}$) connected to said first vertical deflecting coil ($L_V$), first and second cores ($27_{11}$, $27_{12}$) respectively provided for said first and second controls ($28_{11}$, $28_{12}$), and at least one first permanent magnet ($29_1$) for magnetizing said first and second cores ($27_{11}$, $27_{12}$) in a given direction, the circuit formed by said first and second control coils ($28_{11}$, $28_{12}$) being connected in series to said first horizontal deflecting coil ($L_{H1}$) so as to form a first series circuit ($L_{H1}$, $28_{11}$, $28_{12}$);

(d) a second saturable reactor ($26_2$, $SR_2$) having third and fourth control coils ($28_{21}$, $28_{22}$) connected in series and wound in opposite directions, third and fourth coils ($RCV_1$, $RCV_2$) connected to said second vertical coil ($L_V$), third and fourth cores ($27_{21}$, $27_{22}$) respectively provided for said third and fourth control coils ($28_{21}$, $28_{22}$), and at least one second permanent magnet ($29_2$) for magnetizing said third and fourth cores ($27_{21}$, $27_{22}$) in a given direction, the circuit formed by said third and fourth control coils being connected in series to said second horizontal deflecting coil ($L_{H2}$) so as to form a second series circuit ($L_{H2}$, $28_{21}$, $28_{22}$); said first and second series circuits being connected in parallel to form a parallel circuit having an input to receive a horizontal deflection driving current ($I_H$);

said first and second saturable reactors ($26_1$, $26_2$) being positioned diametrically opposite one another with respect to a neck portion of said picture tube (21) so as to receive leakage flux from said first and second vertical deflecting coils ($L_{H1}$, $L_{H2}$);

the winding directions of said first through fourth control coils ($28_{11}$—$28_{22}$) and the polarity of said permanent magnets ($29_1$, $29_2$) of said first and second saturable reactors ($26_1$, $26_2$) being selected such that the impedance of said circuits formed said first and second coils ($28_{11}$, $28_{12}$) increases or decreases when the impedance of said circuit formed by said third and fourth control coils ($28_2$, $28_{22}$) respectively decreases or increases in accordance with the degree of vertical deflection effected by said vertical deflecting coils ($L_V$); characterised in that

(e) means ($SR_{1a}$, $SR_{2a}$) are provided for causing a ratio $\Theta e/\Theta m$ to assume a value equal to or smaller than 0.5 so that increasing the rate of the amount of correction of the convergence of horizontal lines decreases as the degree of vertical deflection is increased, where $\Theta m$ is a differential coefficient around the center of the picture where the degree of vertical deflection is very small and $\Theta e$ is a differential coefficient representing the top and bottom sides of the picture where the degree of vertical deflection is maximum, each of said differential coefficients corresponding to the changing rate of the inductance of said first through fourth control coils ($28_{11}$—$28_{22}$) of said saturable reactors ($26_1$, $26_2$),

said means ($SR_{1a}$, $SR_{2a}$) including at least one magnetic member (41) provided to said first and second cores ($27_{11}$, $27_{12}$) of said first saturable reactor ($26_1$) and said third and fourth cores ($27_{21}$, $27_{22}$) of said second saturable reactor ($26_2$) so as to reduce the reluctance of the magnetic circuits and the cores of said saturable reactors ($26_1$, $26_2$); wherein said at least one magnetic member (41) is either a ring-like metallic band placed close to said permanent magnet ($29_1$, $29_2$) of each of said first and second saturable reactors ($26_1$, $26_2$) or a pair of magnetic units each being a U-shaped metallic element placed close to said permanent magnet ($29_1$, $29_2$), of each of said first and second saturable reactors ($26_1$, $26_2$).

**Patentansprüche**

1. Bildkorrekturvorrichtung (21) zur Verwendung mit einer "in-line"-Farbbildröhre mit einem Selbst-Konvergenz-System, mit

(a) ersten und zweiten Horizontal-Ablenkwicklungen ($L_{H1}$, $L_{H2}$);

(b) ersten und zweiten Vertikal-Ablenkwicklungen ($L_V$);

(c) einem ersten sättigbaren Reaktor ($26_1$, $SR_1$) mit ersten und zweiten Steuerwicklungen ($28_{11}$, $28_{12}$), die in Reihe geschaltet und entgegengesetzt gewickelt sind, ersten und zweiten Wicklungen ($RCV_1$, $RCV_2$), die mit der ersten Vertikal-Ablenkwicklung ($L_V$) verbunden sind, ersten und zweiten Kernen ($27_{11}$, $27_{12}$), die jeweils für die erste und zweite Steuerwicklung ($28_{11}$, $28_{12}$) vorgesehen sind, und mindestens einem ersten Permanentmagneten ($29_1$) zum Magnetisieren des ersten und des zweiten Kerns ($27_{11}$, $27_{12}$) in einer

bestimmten Richtung, wobei die durch die erste und die zweite Steuerwicklung ($28_{11}$, $28_{12}$) gebildete Schaltung in Reihe an der ersten Horizontal-Ablenkwicklung ($L_{H1}$) angeschlossen ist, um so eine erste Reihenschaltung ($L_{H1}$, $28_{11}$, $28_{12}$) zu bilden;

(d) einem zweiten gesättigten Reaktor ($26_2$, $SR_2$) mit dritten und vierten Steuerwicklungen ($28_{21}$, $28_{22}$), die in Reihe verbunden und in entgegengesetzter Richtung gewickelt sind, dritten und vierten Wicklungen ($RCV_1$, $RCV_2$), die mit der zweiten Vertikal-Ablenkwicklung ($L_V$) verbunden sind, dritten und vierten Kernen ($27_{21}$, $27_{22}$), die jeweils für die dritte bzw. vierte Steuerwicklung ($28_{21}$, $28_{22}$) vorgesehen sind, und mindestens einem zweiten Permanentmagneten ($29_2$) zum Magnetisieren des dritten und des vierten Kerns ($27_{21}$, $27_{22}$) in einer bestimmten Richtung, wobei die durch die dritte und vierte Steuerwicklung gebildete Schaltung in Reihe an der zweiten Horizontal-Ablenkwicklung ($L_{H2}$) angeschlossen ist, um so eine zweite Reihenschaltung ($L_{H2}$, $28_{21}$, $28_{22}$) zu bilden; wobei die ersten und die zweite Reihenschaltung parallel miteinander verbunden sind, um eine Parallelschaltung zu bilden mit einem Eingang zum Aufnehmen eines Horizontal-Ablenk-Steuerstromes ($I_H$);

wobei der erste und der zweite sättigbare Reaktor ($26_1$, $26_2$) diametral einander entgegengesetzt bezüglich eines Halsabschnittes der Bildröhre (21) angeordnet sind, um so Leckfluß von der ersten und der zweiten Vertikal-Ablenkwicklung ($L_{H1}$, $L_{H2}$) zu erhalten;

wobei die Wicklungsrichtungen der ersten bis vierten Steuerwicklung ($28_{11}$—$28_{22}$) und die Polarität der Permanentmagneten ($29_1$, $29_2$) des ersten und des zweiten sättigbaren Reaktors ($26_1$, $26_2$) so ausgewählt sind, daß die Impedanz der durch die erste und die zweite Wicklung ($28_{11}$, $28_{12}$) gebildeten Schaltung zunimmt oder abnimmt, wenn die Impedanz der durch die dritte bzw. vierte Steuerwicklung ($28_{21}$, $28_{22}$) gebildeten Schaltung jeweils abnimmt oder zunimmt, entsprechend dem durch die Vertikal-Ablenkwicklungen ($L_V$) bewirkten Grad der Vertikalablenkung; dadurch gekennzeichnet, daß

(e) Mittel ($SR_{1a}$, $SR_{2a}$) vorgesehen sind, um ein Verhältnis $\Theta e/\Theta m$ einen Wert gleich oder kleiner 0,5 annehmen zu lassen, so daß ein Ansteigen der Rate der Korrekturgröße der Konvergenz von horizontalen Zeilen abnimmt, wenn das Ausmaß der Vertikalablenkung erhöht wird, wobei $\Theta m$ ein Differentialkoeffizient um die Mitte des Bildes ist, wo der Grad der Vertikalablenkung sehr klein ist, und $\Theta e$ ein Differentialkoeffizient ist, der die obere und die untere Seite des Bildes repräsentiert, wo der Grad von Vertikalablenkung maximal ist, und jeder Differentialkoeffizient der sich ändernden Rate der Induktanz der ersten bis vierten Steuerwicklung ($28_{11}$—$28_{22}$) der sättigbaren Reaktoren ($26_1$, $26_2$) entspricht,

die Mittel ($SR_{1a}$, $SR_{2a}$) erste und zweite Hilfswicklungen ($31_1$, $31_2$) enthalten, die jeweils um sowohl die ersten wie die zweiten Kerne ($27_{11}$, $27_{12}$) des ersten sättigbaren Reaktors ($26_1$, $SR_1$)

und sowohl den dritten wie auch den vierten Kern ($27_{21}$, $27_{22}$) des zweiten sättigbaren Reaktors ($26_2$, $SR_2$) gewickelt sind, die erste und die zweite Hilfswicklung ($31_1$, $31_2$) mit den Vertikal-Ablenkwicklungen ($L_V$) in Reihe verbunden sind, um mit einem Vertikal-Ablenk-Ansteuerstrom versorgt zu werden, die Wickelrichtung der Hilfswicklungen ($31_1$, $31_2$) so ausgewählt sind, daß das durch die Hilfswicklungen erzeugte Magnetfeld ($H_c$) jeweils in der gleichen Richtung wie das des Leckflusses ($H_{V''}$, $H_{V''}$) vorhanden ist.

2. Bildkorrekturvorrichtung (21) zur Verwendung mit einer "in-line"-Farbbildröhre mit einem Selbst-Konvergenz-System, mit

(a) ersten und zweiten Horizontal-Ablenkwicklungen ($L_{H1}$, $L_{H2}$);

(b) ersten und zweiten Vertikal-Ablenkwicklungen ($L_V$);

(c) einem ersten sättigbaren Reaktor ($26_1$, $SR_1$) mit ersten und zweiten Steuerwicklungen ($28_{11}$, $28_{12}$), die in Reihe geschaltet und entgegengesetzt gewickelt sind, ersten und zweiten Wicklungen ($RCV_2$), die mit der ersten Vertikal-Ablenkwicklung ($L_V$) verbunden sind, ersten und zweiten Kernen ($27_{11}$, $27_{12}$), die jeweils für die erste und zweite Steuerwicklung ($28_{11}$, $28_{12}$) vorgesehen sind, und mindestens einem ersten Permanentmagneten ($29_1$) zum Magnetisieren des ersten und des zweiten Kerns ($27_{11}$, $27_{12}$) in einer bestimmten Richtung, wobei die durch die erste und die zweite Steuerwicklung ($28_{11}$, $28_{12}$) gebildete Schaltung in Reihe an der ersten Horizontal-Ablenkwicklung ($L_{H1}$) angeschlossen ist, um so eine erste Reihenschaltung ($L_{H1}$, $28_{11}$, $28_{12}$) zu bilden;

(d) einem zweiten gesättigten Reaktor ($26_2$, $SR_2$) mit dritten und vierten Steuerwicklungen ($28_{21}$, $28_{22}$), die in Reihe verbunden und in entgegengesetzter Richtung gewickelt sind, dritten und vierten Wicklungen ($RCV_1$, $RCV_2$), die mit der zweiten Vertikalwicklung ($L_V$) verbunden sind, dritten und vierten Kernen ($27_{21}$, $27_{22}$), die jeweils für die dritte bzw. vierte Steuerwicklung ($28_{21}$, $28_{22}$) vorgesehen sind, und mindestens einem zweiten Permanentmagneten ($29_2$) zum Magnetisieren des dritten und des vierten Kerns ($27_{21}$, $27_{22}$) in einer bestimmten Richtung, wobei die durch die dritte und vierte Steuerwicklung gebildete Schaltung in Reihe an der zweiten Horizontal-Ablenkwicklung ($L_{H2}$) angeschlossen ist, um so eine zweite Reihenschaltung ($L_{H2}$, $28_{21}$, $28_{22}$) zu bilden; wobei die erste und die zweite Reihenschaltung parallel miteinander verbunden sind, um eine Parallelschaltung zu bilden mit einem Eingang zum Aufnehmen eines Horizontal-Ablenk-Steuerstromes ($I_H$);

wobei der erste und der zweite sättigbare Reaktor ($26_1$, $26_2$) diametral einander entgegengesetzt bezüglich eines Halsabschnittes der Bildröhre (21) angeordnet sind, um so Leckfluß von der ersten und der zweiten Vertikal-Ablenkwicklung ($L_{H1}$, $L_{H2}$) zu erhalten;

wobei die Wicklungsrichtungen der ersten bis vierten Steuerwicklung ($28_{11}$—$28_{22}$) und die Polarität der Permanentmagneten ($29_1$, $29_2$) des ersten

und des zweiten sättigbaren Reaktors ($26_1$, $26_2$) so ausgewählt sind, daß die Impedanz der durch die erste und die zweite Wicklung ($28_{11}$, $28_{12}$) gebildeten Schaltung zunimmt oder abnimmt, wenn die Impedanz der durch die dritte bzw. vierte Steuerwicklung ($28_{21}$, $28_{22}$) gebildeten Schaltung jeweils abnimmt oder zunimmt, entsprechend dem durch die Vertikal-Ablenkwicklungen ($L_V$) bewirkten Grad der Vertikalablenkung; dadurch gekennzeichnet, daß

(e) Mittel ($SR_{1a}$, $SR_{2a}$) vorgesehen sind, um ein Verhältnis $\Theta e/\Theta m$ einen Wert gleich oder kleiner 0,5 annehmen zu lassen, so daß ein Ansteigen der Rate der Korrekturgröße der Konvergenz von horizontalen Zeilen abnimmt, wenn das Ausmaß der Vertikalablenkung erhöht wird, wobei $\Theta m$ ein Differentialkoeffizient um die Mitte des Bildes ist, wo der Grad der Vertikalablenkung sehr klein ist, und $\Theta e$ ein Differentialkoeffizient ist, der die obere und die untere Seite des Bildes repräsentiert, wo der Grad von Vertikalablenkung maximal ist, und jeder Differentialkoeffizient der sich ändernden Rate der Induktanz der ersten bis vierten Steuerwicklung ($28_{11}$—$28_{22}$) der sättigbaren Reaktoren ($26_1$, $26_2$) entspricht,

wobei die Mittel ($SR_{1a}$, $SR_{2a}$) mindestens ein Magnetglied (41) enthalten, das zu den ersten und zweiten Kernen ($27_{11}$, $27_{12}$) des ersten sättigbaren Reaktors ($26_1$) und den dritten und vierten Kernen ($27_{21}$, $27_{22}$) des zweiten sättigbaren Reaktors ($26_2$) vorgesehen ist, um die Reluktanz der Magnetkreise und der Kerne der sättigbaren Reaktoren ($26_1$, $26_2$) zu reduzieren;

wobei das mindestens eine Magnetglied (41) entweder ein dicht an dem Permanentmagneten ($29_1$, $29_2$) jedes ersten und zweiten sättigbaren Reaktors ($26_1$, $26_2$) angeordnetes, ringartiges Metallband ist oder ein Paar Magneteinheiten, die jeweils ein U-förmiges Metallelement sind, das dicht an den Permanentmagneten ($29_1$, $29_2$) jedes ersten und zweiten sättigbaren Reaktors ($26_1$, $26_2$) gesetzt ist.

**Revendications**

1. Dispositif (2) de correction d'image pour un tube couleur à canons en ligne d'un système auto-convergent, comprenant:

a) une première et une deuxième bobines de déviation horizontale (LH1, LH2);

b) une première et une deuxième bobines de déviation verticale (LV);

c) un premier bobinage à saturation ($26_1$, $SR_1$) comportant une première et une deuxième bobines de commande ($28_{11}$, $28_{12}$) connectées en série et enroulées en sens contraire, une première et une deuxième bobines ($RCV_1$, $RCV_2$) connectées à la première bobine de déviation verticale ($L_V$), un premier et un deuxième noyaux ($27_{11}$, $27_{12}$) prévus respectivement pour la première et la deuxième bobines de commande ($28_{11}$, $28_{+2}$) et au moins un premier aimant permanent ($29_1$) pour aimanter le premier et le deuxième noyaux ($27_{11}$, $27_{12}$) dans un sens donné, le circuit formé par la première et la deuxième bobines de commande

($28_{11}$, $28_{12}$) étant connecté en série à la première bobine de déviation horizontale (LH$_1$) de manière à former un premier circuit en série (LH1, $28_{11}$, $28_{12}$);

d) un deuxième bobinage à saturation ($26_2$, $SR_2$) comportant une troisième et une quatrième bobines de commande ($28_{21}$, $28_{22}$) connectées en série et enroulées en sens contraire, une troisième et une quatrième bobines ($RCV_1$, $RCV_2$) connectées à la deuxième bobine de déviation verticale ($L_V$), un troisième et un quatrième noyaux ($27_{21}$, $27_{22}$) prévus respectivement pour la troisième et la quatrième bobines de commande ($28_{21}$, $28_{22}$), et au moins un deuxième aimant permanent ($29_2$) pour aimanter le troisième et le quatrième noyaux ($27_{21}$, $27_{22}$) dans un sens donné, le circuit formé par la troisième et la quatrième bobines de commande étant connecté en série à la deuxième bobine de déviation horizontale (LH2) de manière à former un deuxième circuit en série (LH$_2$, $28_{21}$, $28_{22}$); ce premier et ce deuxième circuits en série étant connectés en parallèle pour former un circuit en parallèle comportant une entrée pour recevoir un courant ($I_H$) de commande de déviation horizontale;

ce premier et ce deuxième bobinages à saturation ($26_1$, $26_2$) étant diamétralement opposés l'un à l'autre par rapport à une partie formant col du tube-image (21) de manière à recevoir le flux de fuite venant de la première et de la deuxième bobines de déviation horizontale (LH1, LH2);

les sens d'enroulement de la première à la quatrième bobines de commande ($28_{11}$ à $28_{22}$) et la polarité des aimants permanents ($29_1$, $29_2$) du premier et du deuxième bobinages à saturation ($26_1$, $26_2$) étant choisis de manière que l'impédance des circuits formés par la première et la deuxième bobines ($28_{11}$, $28_{12}$) augmente ou diminue lorsque l'impédance du circuit formé par la troisième et la quatrième bobines de commande ($28_{11}$, $28_{22}$) diminue ou augmente respectivement conformément au degré de déviation verticale produite par les bobines de déviation verticale (Lv); caractérisé en ce que

e) des moyens ($SR_{1a}$, $SR_{2a}$) sont prévus pour qu'un rapport Oe/Om prenne une valeur égale ou inférieure à 0,5 de sorte que l'augmentation du taux de correction de la convergence des lignes horizontales diminue, lorsque de dégré de déviation verticale est augmenté, rapport dans lequel Om est un coefficient différentiel pour la zone entourant le centre de l'image où le degré de déviation verticale est très faible et Oe est un coefficient différentiel représentant les côtés haut et bas de l'image où le degré de déviation verticale est maximal, chacun de ces coefficients différentiels correspondant au degré variable d'inductance de la première à la quatrième bobines de commande ($28_{11}$ à $28_{22}$) des bobinages à saturation ($26_1$, $26_2$),

ces moyens ($SR_{1a}$, $SR_{2a}$) comprenant une première et une deuxième bobines auxiliaires ($31_1$, $31_2$) enroulées respectivement à la fois autour du premier et du deuxième noyaux ($27_{11}$, $27_{12}$) du

premier bobinage à saturation ($26_1$, $SR_1$) et autour du troisième et du quatrième noyaux ($26_{11}$, $27_{22}$) du deuxième bobinage à saturation ($26_2$, $SR_2$), cette première et cette deuxième bobines auxiliaires ($31_1$, $31_2$) étant connectées en série aux bobines de déviation verticale (Lv) pour recevoir un courant de commande de déviation verticale, le sens d'enroulement de ces bobines auxiliaires ($31_1$, $31_2$) étant choisi pour que le champ magnétique ($H_c$) créé par ces bobines auxiliaires ait respectivement le même sens que celui du flux de fuite ($H_{v1}$, $H_{v1}1$).

2. Dispositif (2) de correction d'image pour un tube couleur à canons en ligne d'un système auto-convergent, comprenant:

a) une première et une deuxième bobines de déviation horizontale (LH1, LH2);

b) une première et une deuxième bobines de déviation verticale (LV);

c) un premier bobinage à saturation ($26_1$, $SR_1$) comportant une première et une deuxième bobines de commande ($28_{11}$, $28_{12}$) connectées en série et enroulées en sens contraire, une première et une deuxième bobines ($RCV_1$, $RCV_2$) connectées à la première bobine de déviation verticale (Lv), un premier et un deuxième noyaux ($27_{11}$, $27_{12}$) prévus respectivement pour la première et la deuxième bobines de commande ($28_{11}$, $28_{12}$) et au moins un premier aimant permanent ($29_1$) pour aimanter le premier et le deuxième noyaux ($27_{11}$, $27_{12}$) dans un sens donné, le circuit formé par la première et la deuxième bobines de commande ($28_{11}$, $28_{12}$) étant connecté en série à la première bobine de déviation horizontale ($LH_1$) de manière à former un premier circuit en série ($LH_1$, $28_{11}$, $28_{12}$);

d) un deuxième bobinage à saturation ($26_2$, $SR_2$) comportant une troisième et une quatrième bobines de commande ($28_{21}$, $28_{22}$) connectées en série et enroulées en sens contraire, une troisième et une quatrième bobines ($RCV_1$, $RVC_2$) connectées à la deuxième bobine de déviation verticale (Lv), un troisième et un quatrième noyaux ($27_{21}$, $27_{22}$) prévus respectivement pour la troisième et la quatrième bobines de commande ($28_{21}$, $28_{22}$), et au moins un deuxième aimant permanent ($29_2$) pour aimanter le troisième et le quatrième noyaux ($27_{21}$, $27_{22}$) dans un sens donné, le circuit formé par la troisième et la quatrième bobines de commande étant connecté en série à la deuxième bobine de déviation horizontale (LH2) de manière à former un deuxième circuit en série (LH2, $28_{21}$, $28_{22}$); ce premier et ce deuxième circuits en série étant connectés en parallèle pour former un circuit en parallèle comportant une entrée pour recevoir un courant ($I_H$) de commande de déviation horizontale;

ce premier et ce deuxième bobinages à saturation ($26_1$, $26_2$) étant diamétralement opposés l'un à l'autre par rapport à une partie formant col du tube-image (21) de manière à recevoir le flux de fuite venant de la première et de la deuxième bobines de déviation horizontale (LH1, LH2);

les sens d'enroulement de la première à la quatrième bobines de commande ($28_{11}$ à $28_{22}$) et la polarité des aimants permanents ($29_1$, $29_2$) du premier et du deuxième bobinages à saturation ($26_1$, $26_2$) étant choisis de manière que l'impédance des circuits formés par la première et la deuxième bobines ($28_{11}$, $28_{12}$) augmente ou diminue lorsque l'impédance du circuit formé par la troisième et la quatrième bobines de commande ($28_{11}$, $28_{22}$) diminue ou augmente respectivement conformément au degré de déviation verticale produite par les bobines de déviation verticale (Lv); caractérisé en ce que

e) des moyens ($SR_{1a}$, $SR_{2a}$) sont prévus pour qu'un rapport Oe/Om prenne une valeur égale ou inférieure à 0,5 de sorte que l'augmentation du taux de correction de la convergence des lignes horizontales diminue, lorsque le dégré de déviation verticale est augmenté, rapport dans lequel Om est un coefficient différentiel pour la zone entourant le centre de l'image où le degré de déviation verticale est très faible et Oe est un coefficient différentiel représentant les côtés haut et bas de l'image où le degré de déviation verticale est maximal, chacun de ces coefficients différentiels correspondant au degré variable d'inductance de la première à la quatrième bobines de commande ($28_{11}$ à $28_{22}$) des bobinages à saturation ($26_1$, $26_2$),

ces moyens ($SR_{1a}$, $SR_{2a}$) comprenant au moins un élément magnétique (41) fourni au premier et au deuxième noyaux ($27_{11}$, $27_{12}$) du premier bobinage à saturation ($26_1$) et au troisième et au quatrième noyaux ($27_{21}$, $27_{22}$) du deuxième bobinage à saturation ($26_2$) afin de réduire la réluctance des circuits magnétiques et des noyaux de ces bobinages à saturation ($26_1$, $26_2$); en ce qu'au moins cet élément magnétique (41) est soit une bande métallique en anneau placée près de l'aimant permanent ($29_1$, $29_2$) de chacun des premier et deuxième bobinages à saturation ($26_1$, $26_2$) ou une paire de pièces magnétiques formées chacune d'un élément métallique en U et placées près de l'aimant permanent ($29_1$, $29_2$) de chacun des premier et deuxième bobinages à saturation ($26_1$, $26_2$).

FIG. 1

FIG. 3

FIG. 2

FIG. 4

FIG. 5 PRIOR ART

*FIG. 6*
*PRIOR ART*

*FIG. 7*
*PRIOR ART*

## FIG. 8 PRIOR ART

## FIG. 9 PRIOR ART

## FIG. 10 PRIOR ART

## FIG. 11 PRIOR ART

*FIG. 12*

*FIG. 13*

*FIG. 14*

*FIG. 15*

*FIG. 16*

FIG. 17

FIG. 18

INDUCTANCE

0                    APPLIED MAGNETIC FIELD

## FIG. 19

## FIG. 20

FIG. 21A

FIG. 21B

FIG. 21C

FIG. 21D

FIG. 22B

FIG. 22A

FIG. 22D

FIG. 22C

FIG. 23

FIG. 24

## FIG. 25

## FIG. 26